# EUROPEAN PATENT APPLICATION

(11) **EP 3 779 750 A1**
(43) Date of publication of application: **17.02.2021**
(21) Application number: 19846176.6
(22) Date of filing: 29.05.2019
(51) Int. Cl.: G06F 21/60, H04L 29/06

(54) **USER IDENTITY CONTENT INFORMATION AUTHENTICATION AND VERIFICATION METHODS AND DEVICES**

(30) Priority: 10.08.2018 CN 201810911526
(71) Applicant: Advanced New Technologies Co., Ltd., George Town, Grand Cayman KY1-9008 (KY)
(72) Inventor: WANG, Husen, Hangzhou, Zhejiang 310000 (CN)
(74) Representative: Goddar, Heinz J.
(86) International application number: PCT/CN2019/088958
(87) International publication number: WO 2020/029660

(57) **Abstract**

One or more embodiments of the present application provide user identity information authentication and verification methods and devices. The user identity information authentication method includes: obtaining a plurality of pieces of identity information of a user; constructing a Merkle tree based on the plurality of pieces of identity information of the user, where leaf nodes of the Merkle tree are generated by encoding identity information of the user; and transmitting, to a storage terminal, mapping relationships between the plurality of pieces of identity information of the user and the leaf nodes, Merkle proofs of the leaf nodes corresponding to the plurality of pieces of identity information of the user on the Merkle tree constructed based on the plurality of pieces of identity information of the user, and a root value of the Merkle tree constructed based on the plurality of pieces of identity information of the user. The storage terminal can include one or more of a client device of a user, a server of a certification authority, or a blockchain-based distributed database.

## Description

### TECHNICAL FIELD

The present application relates to the field of communications technologies, and in particular, to user identity information authentication and verification methods and devices.

### BACKGROUND

When generating a digital certificate, a certification authority (CA) usually stores all the identity information of the user, including a name, an identity number (which is a social uniform credit code or an organization verification code for an organization, or an identity card number for an individual user), an address, etc., in the digital certificate in a plaintext format or an encoding format (such as base 64) that can be reversely decoded. When the digital certificate is verified, all the identity information contained in the digital certificate can be obtained by the verification authority, and disclosure of all the identity information is unnecessary in most cases. There is still a lack of a digital certificate authenticated by a CA that can be used to selectively disclose identity information of a user.

### SUMMARY

In view of the previous problem, the present application provides a user identity information authentication method, including: obtaining a plurality of pieces of identity information of a user; constructing a Merkle tree based on the plurality of pieces of identity information of the user, where leaf nodes of the Merkle tree are generated by encoding identity information of the user; and transmitting, to a storage terminal, mapping relationships between the plurality of pieces of identity information of the user and the leaf nodes, Merkle proofs of the leaf nodes corresponding to the plurality of pieces of identity information of the user on the Merkle tree constructed based on the plurality of pieces of identity information of the user, and a root value of the Merkle tree constructed based on the plurality of pieces of identity information of the user.

Preferably, the leaf nodes of the Merkle tree are encoded based on the identity information of the user and other data information; and the method further includes: transmitting mapping relationships between the other data information and the leaf nodes to the storage terminal.

Preferably, the other data information is a random number.

Preferably, the storage terminal includes one or more of a client device of the user, a server of a certification authority or a blockchain-based distributed database.

Preferably, the storage terminal includes a server of a certification authority; and the root value of the Merkle tree constructed based on the plurality of pieces of identity information of the user is stored in a digital certificate of the user by the certification authority; where the digital certificate includes a content portion and a signature portion, the content portion includes the root value of the Merkle tree constructed based on the plurality of pieces of identity information of the user, and the signature portion is an electronic signature of the content portion.

Preferably, the content portion of the digital certificate further includes the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user.

Preferably, the storage terminal further includes a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

Preferably, the content portion of the digital certificate of the user further includes a public key of the user.

Preferably, the identity information of the user includes one or more of a public key of the user, a name of the user, an address of the user, or an identification number of the user.

Preferably, the encoding includes hash encoding.

The present application further provides a user identity information verification method, including: in response to identity information to be verified, obtaining, from a storage terminal, a Merkle proof of a leaf node corresponding to the identity information to be verified based on mapping relationships between the identity information to be verified and leaf nodes of a Merkle tree constructed based on a plurality of pieces of identity information of a user, and a root value of the Merkle tree constructed based on the plurality of pieces of identity information of the user, where leaf nodes of the Merkle tree are generated by encoding identity information of the user; calculating a root value of a Merkle tree corresponding to the identity information to be verified based on the identity information to be verified and the Merkle proof; and determining whether the root value of the Merkle tree corresponding to the identity information to be verified is the same as the root value of the Merkle tree constructed based on the plurality of pieces of identity information of the user.

Preferably, the leaf nodes of the Merkle tree are encoded based on the identity information of the user and other data information; the method further includes: obtaining mapping relationships between the other data information and the leaf nodes from the storage terminal; and calculating a root value of a Merkle tree corresponding to the identity information to be verified based on the identity information to be verified and the Merkle proof includes: calculating the root value of the Merkle tree corresponding to the identity information to be verified based on the identity information to be verified, the other data information, and the Merkle proof.

Preferably, the other data information is a random number.

Preferably, the storage terminal includes one or more of a client device of the user, a server of a certification authority or a blockchain-based distributed database.

Preferably, the storage terminal includes a server of a certification authority; and the root value of the Merkle tree constructed based on the plurality of pieces of identity information of the user is stored by the certification authority in a digital certificate of the user, where the digital certificate includes a content portion and a signature portion, the content portion includes the root value of the Merkle tree constructed based on the plurality of pieces of identity information of the user, and the signature portion is an electronic signature of the content portion; and obtaining, from the storage terminal, the root value of the Merkle tree constructed based on the plurality of pieces of identity information of the user includes: obtaining a digital certificate of the user; verifying the digital certificate by using a corresponding public key of a certification authority of the digital certificate; and obtaining the root value of the Merkle tree constructed based on the plurality of pieces of identity information of the user after the verification is passed.

Preferably, the content portion of the digital certificate further includes the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user; and obtaining, from the storage terminal, the Merkle proof of the leaf node corresponding to the identity information to be verified on the Merkle tree constructed based on the plurality of pieces of identity information of the user includes: obtaining a digital certificate of the user; verifying the digital certificate by using a corresponding public key of a certification authority of the digital certificate; and obtaining a mapping relationship between the identity information to be verified and the leaf node after the verification is passed, and obtaining, based on the mapping relationship between the identity information to be verified and the leaf node, the Merkle proof of the leaf node corresponding to the identity information to be verified on the Merkle tree constructed based on the plurality of pieces of identity information of the user.

Preferably, the storage terminal further includes a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

Preferably, the content portion of the digital certificate of the user further includes a public key of the user.

Preferably, the identity information of the user includes one or more of a public key of the user, a name of the user, an address of the user, or an identification number of the user.

Preferably, the encoding includes hash encoding.

The present application further provides a user identity information authentication device, including: an acquisition unit, configured to obtain a plurality of pieces of identity information of a user; a Merkle tree construction unit, configured to construct a Merkle tree based on the plurality of pieces of identity information of the user, where leaf nodes of the Merkle tree are generated by encoding identity information of the user; and a transmitting unit, configured to transmit, to a storage terminal, mapping relationships between the plurality of pieces of identity information of the user and the leaf nodes, Merkle proofs of the leaf nodes corresponding to the plurality of pieces of identity information of the user on the Merkle tree constructed based on the plurality of pieces of identity information of the user, and a root value of the Merkle tree constructed based on the plurality of pieces of identity information of the user.

Preferably, the leaf nodes of the Merkle tree are encoded based on the identity information of the user and other data information; and the transmitting unit is further configured to transmit mapping relationships between the other data information and the leaf nodes to the storage terminal.

Preferably, the other data information is a random number.

Preferably, the storage terminal includes one or more of a client device of the user, a server of a certification authority or a blockchain-based distributed database.

Preferably, the storage terminal includes a server of a certification authority; and the root value of the Merkle tree constructed based on the plurality of pieces of identity information of the user is stored in a digital certificate of the user by the certification authority; where the digital certificate includes a content portion and a signature portion, the content portion includes the root value of the Merkle tree constructed based on the plurality of pieces of identity information of the user, and the signature portion is an electronic signature of the content portion.

Preferably, the content portion of the digital certificate further includes the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user.

Preferably, the storage terminal further includes a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

Preferably, the content portion of the digital certificate of the user further includes a public key of the user.

The present application further provides a user identity information verification device, including: an acquisition unit, configured to: in response to identity information to be verified, obtaining, from a storage terminal, a Merkle proof of a leaf node corresponding to the identity information to be verified based on mapping relationships between the identity information to be verified and leaf nodes of a Merkle tree constructed based on a plurality of pieces of identity information of a user, and a root value of the Merkle tree constructed based on the plurality of pieces of identity information of the user, where leaf nodes of the Merkle tree are generated by encoding identity information of the user; a calculation unit, configured to calculate a root value of a Merkle tree corresponding to the identity information to be verified based on the identity information to be verified and the Merkle proof; and a comparing unit, configured to determine whether the root value of the Merkle tree corresponding to the identity information to be verified is the same as the root value of the Merkle tree constructed based on the plurality of pieces of identity information of the user.

Preferably, the leaf nodes of the Merkle tree are encoded based on the identity information of the user and other data information; and the acquisition unit is further configured to obtain mapping relationships between the other data information and the leaf nodes from the storage terminal; and the calculation unit is further configured to: calculate the root value of the Merkle tree corresponding to the identity information to be verified based on the identity information to be verified, the other data information, and the Merkle proof.

Preferably, the other data information is a random number.

Preferably, the storage terminal includes one or more of a client device of the user, a server of a certification authority or a blockchain-based distributed database.

Preferably, the storage terminal includes a server of a certification authority; the root value of the Merkle tree constructed based on the plurality of pieces of identity information of the user is stored by the certification authority in a digital certificate of the user, where the digital certificate includes a content portion and a signature portion, the content portion includes the root value of the Merkle tree constructed based on the plurality of pieces of identity information of the user, and the signature portion is an electronic signature of the content portion; and the acquisition unit is further configured to: obtain a digital certificate of the user; verify the digital certificate by using a corresponding public key of a certification authority of the digital certificate; and obtain the root value of the Merkle tree constructed based on the plurality of pieces of identity information of the user after the verification is passed.

Preferably, the content portion of the digital certificate further includes the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user; and the acquisition unit is further configured to: obtain a digital certificate of the user; verify the digital certificate by using a corresponding public key of a certification authority of the digital certificate; and obtain a mapping relationship between the identity information to be verified and the leaf node after the verification is passed, and obtain, based on the mapping relationship between the identity information to be verified and the leaf node, the Merkle proof of the leaf node corresponding to the identity information to be verified on the Merkle tree constructed based on the plurality of pieces of identity information of the user.

Preferably, the storage terminal further includes a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

Preferably, the content portion of the digital certificate of the user further includes a public key of the user.

Correspondingly, the present application further provides a computer device, including a storage device and a processor, where the storage device stores a computer program that can be run by the processor; and when the processor runs the computer program, the previous user identity information authentication method is performed.

Correspondingly, the present application further provides a computer device, including a storage device and a processor, where the storage device stores a computer program that can be run by the processor; and when the processor runs the computer program, the previous user identity information verification method is performed.

Correspondingly, the present application further provides a computer-readable storage medium, where the medium stores a computer program; and when the computer program is run by a processor, the previous user identity information authentication method is performed.

Correspondingly, the present application further provides a computer-readable storage medium, where the medium stores a computer program; and when the computer program is run by a processor, the previous user identity information verification method is performed.

The existing digital certificate contains the plaintext of all the identity information of the user or all the encoded identity information. After obtaining the digital certificate of the user, the verification authority can determine or obtain all the identity information of the user through decoding, thus causing unnecessary identity information disclosure. According to the user identity information authentication and verification methods and devices provided in some embodiments of the present application, a Merkle tree is constructed based on the plurality of pieces of identity information of the user, and it is ensured, based on a root value of the Merkle tree, that any piece of authenticated identity information is not tampered with; a root value of the Merkle tree is generated by using the Merkle proof of the identity information to be verified and the identity information to be verified, to check whether the identity information to be verified passes the verification. Therefore, when verifying the identity of the user, the verification authority only determines the identity information to be verified of the user or the identity information related to the identity information to be verified, and cannot obtain all the identity information of the user, thereby preventing unnecessary identity information disclosure, and further improving the security of the verification process of the identity information of the user.

### BRIEF DESCRIPTION OF DRAWINGS

FIG. 1 is a flowchart illustrating a user identity information authentication or verification method, according to an example embodiment of the present application;
FIG. 2 is a schematic diagram illustrating a Merkle tree constructed based on a plurality of pieces of identity information of a user, according to an example embodiment of the present application;
FIG. 3 is a schematic diagram illustrating a user identity information authentication device, according to an example embodiment of the present application;
FIG. 4 is a schematic diagram illustrating a user identity information verification device, according to an example embodiment of the present application; and
FIG. 5 is a schematic diagram illustrating a hardware structure of a user identity information authentication or verification device, according to an example embodiment of the present application.

### DESCRIPTION OF EMBODIMENTS

A digital certificate is a file that is digitally signed by an identity certification authority and contains user identity information (typically public key, name, identity code, etc. of a user). The digital certificate is an authoritative electronic document that can be used for identify verification on the Internet, and can be used to prove or verify an identity of a user or others in Internet communication, for example, in secure electronic transaction processing and secure electronic transaction activities, such as sending secure e-mail messages, accessing secure sites, online securities trading, online bidding procurement, online office, online insurance, online taxation, online contract signing, and online banking.

When generating a digital certificate, an identity certification authority (also referred to as CA) usually stores all identity information of the user, including a name, an identity number (which is a social uniform credit code or an organization verification code for an organization, or an identity card number for an individual user), an address, etc., in the digital certificate in a plaintext format or an encoding format. When the digital certificate is verified, all the identity information contained in the digital certificate can be obtained by the verification authority, and disclosure of all the identity information is unnecessary in most cases. For example, when e-commerce is used for shopping, information such as an identity card number, a home address, and residence information of a buyer user generally does not need to be disclosed to an electronic commerce website or a seller. However, a verification method for selectively disclosing the identity information of the user is still lacking.

The digital certificate-based identity verification method is generally used for identity verification on the Internet. The online authentication mode is generally implemented by using an identity card, a business license, etc. issued by a state authority. Similarly, a personal identity card (or a household register book) and a business license (or an organization certificate) of a company include a lot of identity information, and most of the identity information are private and should not be disclosed. However, a verification method that can be implemented offline and used for selectively disclosing the identity information of the user is still lacking.

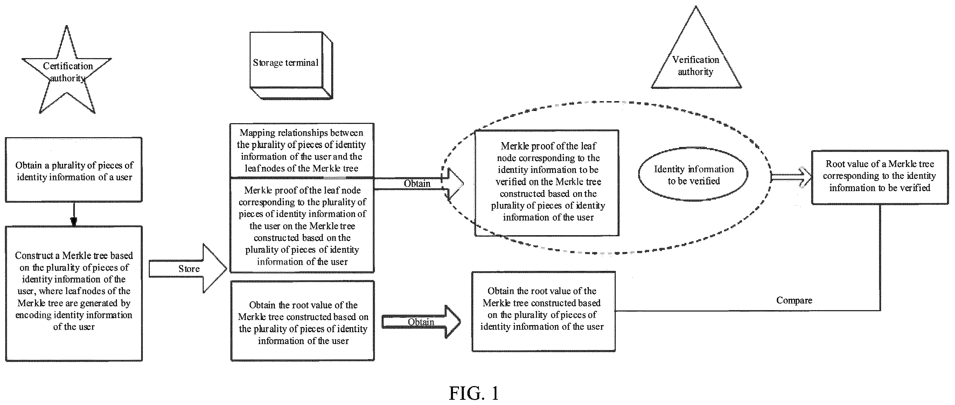

To alleviate the previous problem, FIG. 1 is a flowchart illustrating a user identity information authentication or verification method, according to an example embodiment of the present application. The method is used by an organization to verify identify information of a user. The method includes the following steps:

Step 102: Obtain a plurality of pieces of identity information of a user.

The term "user" in the previous embodiments of the present application can include an individual user and an organization, and can include a computer device, other terminal devices involved in network communication, or an individual such as a web page, etc. The present application is not limited thereto. Any individual requiring authentication in an online or offline scenario can be a user described in the present application.

The plurality of pieces of identity information of the user described in the previous embodiments of the present application can include a name, an identity card number, an address of the user, etc. of a user; or a name, a code, an address, and juridical person information, etc. of an organization; or a server name, an IP address, etc. of a webpage. A public key is an important piece of identity information, and is widely used on behalf of a user's identity in various online application scenarios. Therefore, the plurality of pieces of identity information of the user described in the previous embodiments can further include the public key of the user. The public key is relative to the private key of the user and is derived from the private key based on a predetermined encryption algorithm, which can include RSA, ECC, etc.

When applying for identity authentication from the identity certification authority, the user transmits a plurality of pieces of identity information to be verified of the user to the server of the certification authority. After receiving the plurality of pieces of identity information, the background database of the certification authority generally verifies the validity of the plurality of pieces of identity information, and verifies the plurality of pieces of identity information as valid information after the verification is passed.

Step 104: Construct a Merkle tree based on the plurality of pieces of identity information of the user, where leaf nodes of the Merkle tree are generated by encoding identity information of the user.

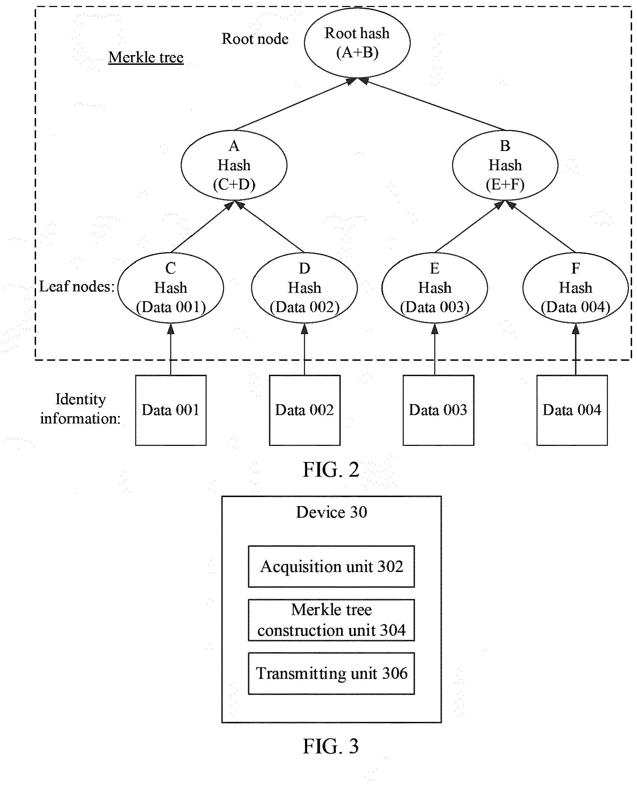

After receiving the plurality of pieces of identity information of the user, or after verifying the validity of the plurality of pieces of identity information of the user, the certification authority constructs a Merkle Tree based on the plurality of pieces of identity information of the user. A Merkle tree is a tree in a data structure, and can be a binary tree or a multi-way tree. FIG. 2 is a schematic diagram illustrating a Merkle tree constructed based on a plurality of pieces of identity information of a user, according to an example embodiment of the present application. As shown in FIG. 2, the plurality of pieces of identity information of the user, that is, Data 001, Data 002, Data 003, and Data 004, are encoded to generate a corresponding plurality of data digests hash (Data 001), hash (Data 002), hash (Data 003), and hash (Data 004), and the plurality of data digests are used as values of the leaf nodes C, D, E, and F of the Merkle tree. Encoding calculation is performed on every two leaf nodes to generate hash (C+D) and hash (E+F) of non-leaf nodes A and B layer by layer. The value of the root node of the Merkle tree (which can be referred to the root value of the Merkle tree in the present application) is finally obtained by performing calculation on the non-leaf nodes layer by layer, and the root value hash (A+B) of the Merkle tree is finally generated, as shown in FIG. 2.

The Merkle tree is constructed using a hash algorithm in FIG. 2, and it should be understood by those skilled in the art that the encoding algorithms that can be used to construct the Merkle tree can include a hash algorithm (for example, MD5 or SHA256), or any other desired encoding algorithm (for example, base 64). Because the hash algorithm is a one-way mapping algorithm, and the original data content cannot be reversely derived from the hash digest, in order to protect privacy of the plurality of pieces of identity information of the user, in some embodiments provided in the present application, a Merkle tree is preferably constructed based on the plurality of pieces of identity information of the user by using the hash algorithm, so as to prevent the original data content of the identity information of the user from being back-extrapolated from the leaf nodes of the Merkle tree. Further, it is worthwhile to note that, during the formation of the Merkle tree, encoding calculation can be performed on the nodes at different layers by using the same or different mathematical encoding algorithms, which is not limited here.

In some embodiments provided in the present application, the quantity of pieces of identity information of the user that are used for generating each leaf node is not limited, and each leaf node can be generated based on one or more pieces of encoded identity information. Further, each leaf node can include other data information in addition to the identity information of the user, which is not limited here.

Step 106: Transmit, to a storage terminal, mapping relationships between the plurality of pieces of identity information of the user and the leaf nodes, Merkle proofs of the leaf nodes corresponding to the plurality of pieces of identity information of the user on the Merkle tree constructed based on the plurality of pieces of identity information of the user, and a root value of the Merkle tree constructed based on the plurality of pieces of identity information of the user.

The data digests stored on the nodes along the path from any node on the Merkle tree to the root node of the Merkle tree can be used to construct a Merkle proof. A node may have a plurality of Merkle proofs. As shown in FIG. 2, the Merkle proof of the leaf node E can be {F, A} or {F, (C+D)}; and the leaf node E performs encoding calculation based on the data digest stored on the nodes included in the Merkle proof, and finally obtains the root value of the Merkle tree. Therefore, to verify whether the identity information Data 003 corresponding to the leaf node E has been tampered with, only the identity information to be verified needs to be used for the encoding calculation, and the result of the encoding calculation and the data digest values corresponding to the Merkle proof {F, A} or {F, (C+D)} of the leaf node E are sequentially used for encoding calculation, so as to obtain the root value of the Merkle tree corresponding to the identity information to be verified, and then the root value of the Merkle tree corresponding to the data to be verified is compared with the root value of the Merkle tree constructed based on the identity information Data 001, Data 002, Data 003, and Data 004. If the two values are equal, it indicates that the identity information to be verified is Data 003. In the previous process of verifying Data 003, the identity information corresponding to other leaf nodes, such as Data 001, Data 002, and Data 004, are not required, and therefore disclosure of other identity information of the user is prevented.

As can be seen from the previous descriptions, in the previous embodiments provided in the present application, to verify the identity information of the user by using the Merkle tree constructed based on the plurality of pieces of identity information of the user, the certification authority needs to transmit the mapping relationships between the plurality of pieces of identity information of the user and the leaf nodes, the Merkle proofs of the leaf nodes corresponding to the plurality of pieces of identity information of the user on the Merkle tree constructed based on the plurality of pieces of identity information of the user, and the root value of the Merkle tree constructed based on the plurality of pieces of identity information of the user. For the method of transmitting the Merkle proofs of the leaf nodes corresponding to the plurality of pieces of identity information of the user on the Merkle tree constructed based on the plurality of pieces of identity information of the user, and the root value of the Merkle tree constructed based on the plurality of pieces of identity information of the user, the entire Merkle tree described in FIG. 2 can be transmitted; and of course, the Merkle proof corresponding to each leaf node and the root value of the Merkle tree can be transmitted separately. The transmitting method is not limited here.

It is worthwhile to note that if the location of the leaf node corresponding to the data changes, for example, the locations of Data 001 and Data 002 shown in FIG. 2 are exchanged, the values of the leaf nodes C and D are also exchanged; and in this case, the value of the node A changes, and finally the value of the root node changes. Therefore, in some embodiments provided in the present application, to facilitate verification of the identity information of the user by using the Merkle tree, the mapping relationships between the plurality of pieces of identity information of the user and the leaf nodes of the Merkle tree should also be transmitted.

The transmission of the mapping relationships between the plurality of pieces of identity information of the user and the leaf nodes of the Merkle tree can be implemented in a plurality of ways. For example, the mapping relationships between the identity information of the user and the leaf nodes of the Merkle tree can be directly transmitted in the form of a mapping table. For another example, to protect the privacy of the identity information of the user, the identity information of the user can be numbered by category, and the mapping relationships between the numbers and the leaf nodes of the Merkle tree are transmitted in the form of a mapping table; alternatively, the certification authority can generate an identity information authentication template that specifies a category of the identity information corresponding to each leaf node of the Merkle tree, so that the mapping relationships between the plurality of pieces of identity information of the user and the leaf nodes of the Merkle tree can be transmitted in a known form based on the template.

Based on one or more of the previous embodiments, as shown in FIG. 1, the certification authority authenticates a plurality of pieces of identity information of a user and constructs a Merkle tree based on the plurality of pieces of identity information of the user, so that the mapping relationships between the plurality of pieces of identity information of the user and the leaf nodes, the Merkle proofs of the leaf nodes corresponding to the plurality of pieces of identity information of the user on the Merkle tree constructed based on the plurality of pieces of identity information of the user, and the root value of the Merkle tree constructed based on the plurality of pieces of identity information of the user are transmitted to the storage terminal.

It is worthwhile to note that the Merkle tree constructed based on the plurality of pieces of identity information of a user, which is described in the previous embodiments provided in the present application, can be generally generated using a hash digest algorithm. Because the hash digest algorithm is a one-way mapping algorithm, even if the verification authority obtains the values of all the leaf nodes of the Merkle tree, the verification authority cannot determine the original text of the identity information of the user that is used for generating the leaf nodes, thereby ensuring the security of the identity information of the user.

Of course, the encoding algorithm of the Merkle tree is not limited to the hash algorithm. If the certification authority constructs the Merkle tree by using a non-hash algorithm, and in particular constructs the Merkle tree by using an encoding format (such as base 64) that can be reversely decoded, in order to further ensure that all the identity information of the user on which the Merkle tree is based is not obtained easily, the leaf nodes of the Merkle tree can be generated based on both the identity information of the user and random numbers. In this embodiment, the certification authority should also transmit the random numbers and the mapping relationships between the random numbers and the leaf nodes, so that the random numbers corresponding to the identity information of the user and the leaf nodes are stored in the storage terminal.

In addition, if a leaf node of the Merkle tree is generated by encoding the identity information and other data information, the certification authority should also transmit the mapping relationships between the other data information and the leaf node, so that other data information corresponding to the identity information of the user and the leaf node is stored in the storage terminal. Similarly, the mapping relationships between the other data information (for example, a random number) and the leaf node can also be implemented in a plurality of ways. For example, the mapping relationships between the other data information and the leaf nodes of the Merkle tree can be directly transmitted in the form of a mapping table. For another example, other data information can be numbered by category, and the mapping relationships between the numbers and the leaf nodes of the Merkle tree are transmitted in the form of a mapping table; alternatively, the certification authority can generate an identity information authentication template that specifies a category of the identity information corresponding to each leaf node of the Merkle tree, and other identity information and categories thereof, so that the mapping relationships between the plurality of pieces of identity information of the user and the leaf nodes of the Merkle tree can be transmitted in a known form based on the template.

So far, the mapping relationships between the plurality of pieces of identity information of the user and the leaf nodes, the Merkle proofs of the leaf nodes corresponding to the plurality of pieces of identity information of the user on the Merkle tree constructed based on the plurality of pieces of identity information of the user, and the root value of the Merkle tree constructed based on the plurality of pieces of identity information of the user are transmitted to the storage terminal; optionally, the mapping relationships between the other data information and the leaf nodes are also transmitted to the storage terminal. The storage terminal described in one or more embodiments of the present application can be implemented in a plurality of ways. For example, the storage terminal can be a server of a certification authority that issues a digital certificate, a client device of a user, a public server of a ledger authority, or a blockchain-based distributed database, which is not limited in the present application.

For example, in one illustrated embodiment, the storage terminal is a server of a certification authority. The certification authority can issue a data certificate to the user to show the certification authority's recognitions of the plurality of pieces of identity information of the user. The digital certificate generally includes a content portion and a signature portion, and the certification authority can store the root value of the Merkle tree constructed based on the plurality of pieces of identity information of the user in the content portion of the digital certificate, and electronically sign the content portion of the digital certificate by using the private key of the certification authority, so as to store the root value of the Merkle tree. From the calculation process of the root value of the Merkle tree described in the previous embodiment, it can be seen that the root value of the Merkle tree is directly related to both the content and location of any leaf node, and the change of the content or location of any leaf node causes the change of the root value. Therefore, the certification authority stores the root value of the Merkle tree in the digital certificate, and further ensures validity and security of the root value by using the digital signature technology, thereby preventing the root value from being maliciously tampered with.

In another illustrated embodiment, the content portion of the digital certificate can further include the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user. When a leaf node is generated by encoding the identity information of the user and other data information (for example, a random number), the content portion of the digital certificate can also include the mapping relationships between the other data information and the leaf node. Thus, the user can complete verification of any identity information authenticated in the digital certificate by simply presenting the digital certificate to the verification authority, thereby ensuring convenience, high security, and high efficiency.

In another illustrated embodiment, the mapping relationships between the plurality of pieces of identity information of the user and the leaf nodes, the Merkle proofs of the leaf nodes corresponding to the plurality of pieces of identity information of the user on the Merkle tree constructed based on the plurality of pieces of identity information of the user, and the root value of the Merkle tree constructed based on the plurality of pieces of identity information of the user are stored in a server of an identity certification authority; and when the leaf node is generated by encoding the identity information of the user and other data information (for example, a random number), the mapping relationships between the other data information and the leaf node should also be stored. Because the identity certification authority is generally a fair authority with an identity authentication qualification, the identity certification authority stores a plurality of pieces of identity information of the authenticated user, and Merkle proofs and a root value of a Merkle tree (which can be represented as a whole course Merkle tree) that are required during the authentication process, and obtains verification information from the identity certification authority when the certification authority verifies any identity information of the user, thereby ensuring authenticity of the obtained verification information.

In another illustrated embodiment, the mapping relationships between the plurality of pieces of identity information of the user and the leaf nodes, the Merkle proofs of the leaf nodes corresponding to the plurality of pieces of identity information of the user on the Merkle tree constructed based on the plurality of pieces of identity information of the user, and the root value of the Merkle tree constructed based on the plurality of pieces of identity information of the user are stored in a client device of the user; and when the leaf node is generated by encoding the identity information of the user and other data information (for example, a random number), the mapping relationships between the other data information and the leaf node should also be stored. Compared with the implementation method in which the previous information is stored in the server of the certification authority, the implementation method provided in this embodiment greatly reduces the storage pressure of the server of the certification authority, but the data provided by the client device of the user is not reliable and authoritative, and can easily tampered with by the user. Therefore, the implementation method can be used together with the implementation method in which the root value of the Merkle tree is stored in the digital certificate. That is, the verification authority can obtain the root value of the Merkle tree from the digital certificate accepted by the certification authority through digital signature, and obtain, from the client device of the user, the Merkle proofs of the leaf nodes corresponding to the identity information to be verified on the Merkle tree constructed based on the plurality of pieces of identity information of the user, thereby ensuring the authenticity of the obtained data and reducing the storage pressure of the server of the certification authority.

In another illustrated embodiment, the mapping relationships between the plurality of pieces of identity information of the user and the leaf nodes, the Merkle proofs of the leaf nodes corresponding to the plurality of pieces of identity information of the user on the Merkle tree constructed based on the plurality of pieces of identity information of the user, and the root value of the Merkle tree constructed based on the plurality of pieces of identity information of the user are stored in a blockchain-based distributed database; and when the leaf node is generated by encoding the identity information of the user and other data information (for example, a random number), the mapping relationships between the other data information and the leaf node should also be stored.

The blockchain network described in the previous embodiments can specifically refer to a P2P network system that is formed by nodes based on a consensus mechanism and that has a distributed data storage structure. In the blockchain network, data is distributed in "blocks" that are connected in terms of time, each block includes a data summary of a previous block, and data of all or some of the nodes is backed up, depending on a specific consensus mechanism (for example, POW, POS, DPOS, or PBFT). It is understood by a person skilled in the art that because the blockchain network system runs under the corresponding consensus mechanism, it is difficult for any node to tamper with the data recorded in the blockchain database. For example, for the blockchain based on the POW consensus mechanism, at least 51% of the computing capability of the entire network is required to launch an attack to tamper with the existing data. Therefore, the blockchain system has incomparable data security and tamper-resistance features over other centralized database systems. Therefore, in some embodiments provided in the present application, the data recorded in the distributed database in the blockchain network will not be attacked or tampered with, thereby ensuring the authenticity of the data obtained by the certification authority when verifying any identity information of the user.

Similarly, the blockchain-based distributed database and the digital certificate can be used together, and the root value of the Merkle tree can be stored in the digital certificate. That is, the verification authority can obtain the root value of the Merkle tree from the digital certificate accepted by the digital signature of the certification authority, and obtain, from the blockchain-based distributed database, the Merkle proofs of the leaf nodes corresponding to the identity information to be verified on the Merkle tree constructed based on the plurality of pieces of identity information of the user, thereby ensuring the authenticity of the obtained data and reducing the storage pressure of the server of the certification authority.

Any authority (the certification authority shown in FIG. 1) that needs to verify the identity information of the user can perform the following steps to complete verification in response to the identity information to be verified:
Step 202: Obtain, from a storage terminal, a Merkle proof of a leaf node corresponding to the identity information to be verified based on mapping relationships between the identity information to be verified and leaf nodes of a Merkle tree constructed based on a plurality of pieces of identity information of a user, and a root value of the Merkle tree constructed based on the plurality of pieces of identity information of the user.

The method for obtaining the Merkle proof can include: obtaining a leaf node corresponding to the identity information to be verified according to the mapping relationship between the identity information to be verified (or its category) and the leaf node stored in the storage terminal, or obtaining a leaf node corresponding to the identity information to be verified according to the mapping relationship between the category of the identity information and the leaf node that is specified in an identity information authentication template of the certification authority; and obtaining, from the Merkle tree stored in the storage terminal, or the Merkle proof of each leaf node stored in the storage terminal, and the root value of the Merkle tree, a Merkle proof of a leaf node corresponding to the identity information to be verified based on mapping relationships between the identity information to be verified and leaf nodes of a Merkle tree constructed based on a plurality of pieces of identity information of a user, and a root value of the Merkle tree constructed based on the plurality of pieces of identity information of the user.

It should be understood by a person skilled in the art that when a leaf node of the Merkle tree is generated by encoding a plurality of pieces of identity information, or is generated by encoding identity information to be verified and other data information, the verification authority should also obtain other information that is used together with the identity information to be verified to generate the leaf node.

It is worthwhile to note that when the storage terminal is a server of a certification authority, the root value of the Merkle tree constructed based on the plurality of pieces of identity information of the user can be stored in the digital certificate of the user by the certification authority; and obtaining the root value of the Merkle tree constructed based on the plurality of pieces of identity information of the user includes: obtaining the digital certificate of the user, where the digital certificate includes a content portion and a signature portion, the content portion includes a root value of the Merkle tree constructed based on the plurality of pieces of identity information of the user, and the signature portion is an electronic signature of the content portion that is provided by a certification authority of the digital certificate; verifying the digital certificate by using a public key corresponding to the certification authority of the digital certificate; and obtaining the root value of the Merkle tree constructed based on the plurality of pieces of identity information of the user after the verification is passed.

Optionally, the content portion of the digital certificate can further include mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user. The previous information can be included in the digital certificate as a whole in the form of a Merkle tree. Accordingly, the Merkle proof of the leaf node corresponding to the identity information to be verified on the Merkle tree constructed based on the plurality of pieces of identity information of the user can be obtained after the verification of the digital certificate is passed, including: obtaining a mapping relationship between the identity information to be verified and the leaf node after the verification is passed, and obtaining the Merkle proof of the leaf node corresponding to the identity information to be verified on the Merkle tree constructed based on the plurality of pieces of identity information of the user.

Similarly, the storage terminal can also be a server of a certification authority, a client device of a user, or a blockchain-based distributed database. This has been described in detail in the previous embodiments, and details are omitted here.

Step 204: Calculate a root value of a Merkle tree corresponding to the identity information to be verified based on the identity information to be verified and the Merkle proof.

The previous step includes: performing encoding calculation based on the identity information to be verified to obtain a data digest corresponding to the identity information to be verified, where the data digest is used as a value of a leaf node of a Merkle tree to be verified; and then sequentially performing encoding calculation based on the data digest and a value of each node included in a Merkle proof of the leaf node corresponding to the identity information to be verified, to finally obtain a root value of the Merkle tree corresponding to the identity information to be verified.

It should be understood by a person skilled in the art that when a leaf node of the Merkle tree is generated by performing encoding calculation based on a plurality of pieces of identity information, or is generated by encoding the identity information to be verified and other data information (for example, a random number), performing encoding calculation based on the identity information to be verified to obtain a data digest corresponding to the identity information to be verified should further include: performing encoding calculation based on the identity information to be verified and other information to obtain a data digest corresponding to the identity information to be verified

Step 206: Determine whether the root value of the Merkle tree corresponding to the identity information to be verified is the same as the root value of the Merkle tree constructed based on the plurality of pieces of identity information of the user.

The root value of the Merkle tree corresponding to the identity information to be verified and the root value of the Merkle tree stored in the storage terminal are compared to determine whether they are the same. If they are the same, the identity information to be verified passes the verification, and the identity information to be verified is identity information accepted by the certification authority.

It can be seen that, by using the user identify information authentication or verification method shown in FIG. 1, the information to be verified of the user can be verified without disclosing other identity information, thereby improving the security of the verification process of the identity information of the user. In addition, in the verification process, only the Merkle proof of the identity information to be verified and the root value of the Merkle tree are transmitted, so that the data transmission amount is reduced and the verification efficiency is improved compared with the conventional verification method. In addition to being used for verification in scenarios such as online data transmission and payment, the user identify information authentication or verification method can also be used for verification in a scenario when the user is offline. For example, when a user checks in a hotel, the hotel can obtain the corresponding information from a storage terminal to verify the identity of the user. Therefore, the method has a wide range of application scenarios.

The identity information of the user described in the previous embodiments provided in the present application can generally include one or more of information such as a public key of the user, a name of the user, an address of the user, an identification number of the user, etc., where the public key of the user is widely used on the Internet as common information, for example, as a representative of the identity of the user, or in a scenario such as description of transmission information or verification of an electronic signature. In addition, the public key information can be widely notified as a string of character codes because the privacy of the user is not disclosed. Therefore, in a preferred embodiment provided in the present application, the public key and the root value of the Merkle tree generated based on a plurality of pieces of identity information of the user can be stored in the content portion of the digital certificate provided in the present application. Thus, the verification authority can directly obtain the public key of the user by verifying the signature of the digital certificate, and the public key of the use can be used in a scenario such as information decryption or verification of the electronic signature of the user.

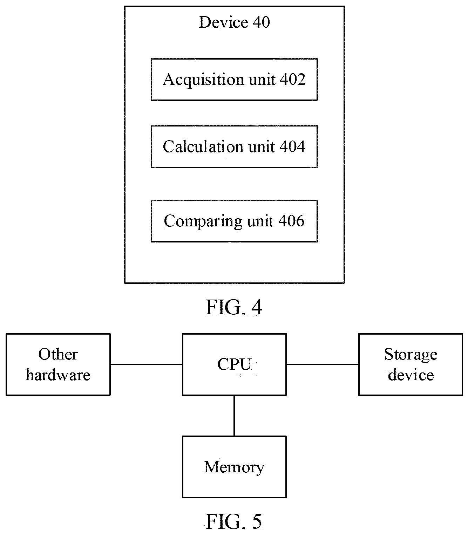

Corresponding to the previous process implementation, some embodiments of the present application further provide a user identity information authentication device and a user identity information verification device. The device can be implemented by using software, hardware, or a combination thereof. The software-based implementation is used as an example. As a logical device, the device is formed by reading, by the central processing unit (CPU) in a device where the device is located, corresponding computer program instructions to a memory for running. At the hardware level, in addition to the CPU, memory, and storage device shown in FIG. 5, the device in which the device is located usually includes other hardware such as a chip for transmitting and receiving radio signals, and/or other hardware such as a board for implementing network communication functions.

FIG. 3 illustrates a user identity information authentication device 30 provided in the present application, including: an acquisition unit 302, configured to obtain a plurality of pieces of identity information of a user; a Merkle tree construction unit 304, configured to construct a Merkle tree based on the plurality of pieces of identity information of the user, where leaf nodes of the Merkle tree are generated by encoding identity information of the user; and a transmitting unit 306, configured to transmit, to a storage terminal, mapping relationships between the plurality of pieces of identity information of the user and the leaf nodes, Merkle proofs of the leaf nodes corresponding to the plurality of pieces of identity information of the user on the Merkle tree constructed based on the plurality of pieces of identity information of the user, and a root value of the Merkle tree constructed based on the plurality of pieces of identity information of the user.

Preferably, the leaf nodes of the Merkle tree are encoded based on the identity information of the user and other data information; and the transmitting unit 306 is further configured to transmit mapping relationships between the other data information and the leaf nodes to the storage terminal.

Preferably, the other data information is a random number.

Preferably, the storage terminal includes one or more of a client device of the user, a server of a certification authority or a blockchain-based distributed database.

Preferably, the storage terminal includes a server of a certification authority; and the root value of the Merkle tree constructed based on the plurality of pieces of identity information of the user is stored in a digital certificate of the user by the certification authority; where the digital certificate includes a content portion and a signature portion, the content portion includes the root value of the Merkle tree constructed based on the plurality of pieces of identity information of the user, and the signature portion is an electronic signature of the content portion.

Preferably, the content portion of the digital certificate further includes the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user.

Preferably, the storage terminal further includes a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

Preferably, the content portion of the digital certificate of the user further includes a public key of the user.

Accordingly, as shown in FIG. 4, the present application further provides an identify information verification device 40, including: an acquisition unit 402, configured to: in response to identity information to be verified, obtaining, from a storage terminal, a Merkle proof of a leaf node corresponding to the identity information to be verified based on mapping relationships between the identity information to be verified and leaf nodes of a Merkle tree constructed based on a plurality of pieces of identity information of a user, and a root value of the Merkle tree constructed based on the plurality of pieces of identity information of the user, where leaf nodes of the Merkle tree are generated by encoding identity information of the user; a calculation unit 404, configured to calculate a root value of a Merkle tree corresponding to the identity information to be verified based on the identity information to be verified and the Merkle proof; and a comparing unit 406, configured to determine whether the root value of the Merkle tree corresponding to the identity information to be verified is the same as the root value of the Merkle tree constructed based on the plurality of pieces of identity information of the user.

Preferably, the leaf nodes of the Merkle tree are encoded based on the identity information of the user and other data information; and the acquisition unit 402 is further configured to obtain mapping relationships between the other data information and the leaf nodes from the storage terminal; and the calculation unit 404 is further configured to: calculate the root value of the Merkle tree corresponding to the identity information to be verified based on the identity information to be verified, the other data information, and the Merkle proof.

Preferably, the other data information is a random number.

Preferably, the storage terminal includes one or more of a client device of the user, a server of a certification authority or a blockchain-based distributed database.

Preferably, the storage terminal includes a server of a certification authority; and the root value of the Merkle tree constructed based on the plurality of pieces of identity information of the user is stored by the certification authority in a digital certificate of the user, where the digital certificate includes a content portion and a signature portion, the content portion includes the root value of the Merkle tree constructed based on the plurality of pieces of identity information of the user, and the signature portion is an electronic signature of the content portion; and the acquisition unit 402 is further configured to: obtain a digital certificate of the user; verify the digital certificate by using a corresponding public key of a certification authority of the digital certificate; and obtain the root value of the Merkle tree constructed based on the plurality of pieces of identity information of the user after the verification is passed.

Preferably, the content portion of the digital certificate further includes the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user; and the acquisition unit 402 is further configured to: obtain a digital certificate of the user; verify the digital certificate by using a corresponding public key of a certification authority of the digital certificate; and obtain a mapping relationship between the identity information to be verified and the leaf node after the verification is passed, and obtain, based on the mapping relationship between the identity information to be verified and the leaf node, the Merkle proof of the leaf node corresponding to the identity information to be verified on the Merkle tree constructed based on the plurality of pieces of identity information of the user.

Preferably, the storage terminal further includes a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

Preferably, the content portion of the digital certificate of the user further includes a public key of the user.

For a detailed implementation process of the functions of the units in the previous device, references can be made to the implementation process of the corresponding steps in the method embodiment. Details are omitted here for simplicity.

The previous device embodiments are merely examples, where the units described as separate parts can or does not have to be physically separate, and components displayed as units can or does not have to be physical units, can be located in one place, or can be distributed on a plurality of network units. Based on actual needs, some or all of these units or modules can be selected to implement the purpose of the present application. A person of ordinary skill in the art can understand and implement the technical solutions in some embodiments without creative efforts.

The devices, units, or modules illustrated in the previous embodiments can be implemented by computer chips, entities, or products having a certain function. A typical implementation device is a computer in the form of a personal computer, a laptop computer, a cellular phone, a camera phone, a smart phone, a personal digital assistant, a media player, a navigation device, an e-mail transceiver, a game console, a tablet computer, a wearable device, or any combination of at least two of these devices.

Corresponding to the previous method embodiments, some embodiments of the present application further provide a computer device, where the computer device includes a storage device and a processor. The storage device stores a computer program that can be run by the processor. When the processor runs the stored computer program, steps of the user identity information authentication method performed by the data center in some embodiments of the present application are performed. For a detailed description of the steps of the user identity information authentication method, references can be made to the previous descriptions. Details are omitted here for simplicity.

Corresponding to the previous method embodiments, some embodiments of the present application further provide a computer device, where the computer device includes a storage device and a processor. The storage device stores a computer program that can be run by the processor. When the processor runs the stored computer program, steps of the user identity information verification method performed by the data center in some embodiments of the present application are performed. For a detailed description of the steps of the user identity information verification method, references can be made to the previous descriptions. Details are omitted here for simplicity.

Corresponding to the previous method embodiments, some embodiments of the present application further provide a computer-readable storage medium, where the medium stores a computer program; and when the computer program is run by a processor, steps of the user identity information authentication method in some embodiments of the present application are performed. For a detailed description of the steps of the user identity information authentication method, references can be made to the previous descriptions. Details are omitted here for simplicity.

Corresponding to the previous method embodiments, some embodiments of the present application further provide a computer-readable storage medium, where the medium stores a computer program; and when the computer program is run by a processor, steps of the user identity information verification method in some embodiments of the present application are performed. For a detailed description of the steps of the user identity information verification method, references can be made to the previous descriptions. Details are omitted here for simplicity.

The previous descriptions are merely preferred embodiments of one or more embodiments of the present application, and are not intended to limit the present application. Any modification, equivalent replacement, improvement, etc., made without departing from the spirit and principles of the present application shall fall within the protection scope of the present application.

In a typical configuration, a computing device includes one or more processors (CPUs), an input/output interface, a network interface, and a memory.

The memory can include a non-persistent memory, a random access memory (RAM), a non-volatile memory, and/or another form that are in a computer-readable medium, for example, a read-only memory (ROM) or a flash memory (flash RAM). The memory is an example of the computer-readable medium.

The computer-readable medium includes persistent, non-persistent, movable, and unmovable media that can store information by using any method or technology. The information can be a computer-readable instruction, a data structure, a program module, or other data.

Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. Based on the definition in the present application, the computer-readable medium does not include transitory media such as a modulated data signal and carrier.

It is also worthwhile to note that terms "include", "include" or any other variant is intended to cover non-exclusive inclusion, so that processes, methods, products or devices that include a series of elements include not only those elements but also other elements that are not explicitly listed, or elements inherent in such processes, methods, products or devices. An element described by "includes a ..." further includes, without more constraints, another identical element in the process, method, product, or device that includes the element.

A person skilled in the art should understand that the embodiments of the present application can be provided as methods, systems, or computer program products. Therefore, the embodiments of the present application can take a form of hardware embodiments, software embodiments, or both. Further, the embodiments of the present application can take a form of computer program products implemented on one or more computer-usable storage media (including but not limited to a disk storage device, CD-ROM, and an optical storage device) containing computer-usable program code.

## Claims

1. An identify information authentication method, comprising:
obtaining a plurality of pieces of identity information of a user;
constructing a Merkle tree based on the plurality of pieces of identity information of the user, wherein leaf nodes of the Merkle tree are generated by encoding identity information of the user; and
transmitting, to a storage terminal, mapping relationships between the plurality of pieces of identity information of the user and the leaf nodes, Merkle proofs of the leaf nodes corresponding to the plurality of pieces of identity information of the user on the Merkle tree constructed based on the plurality of pieces of identity information of the user, and a root value of the Merkle tree constructed based on the plurality of pieces of identity information of the user.

2. The method according to claim 1, wherein the leaf nodes of the Merkle tree are encoded based on the identity information of the user and other data information; and
the method further comprises: transmitting mapping relationships between the other data information and the leaf nodes to the storage terminal.

3. The method according to claim 2, wherein the other data information is a random number.

4. The method according to any one of claims 1 to 3, wherein the storage terminal comprises one or more of a client device of a user, a server of a certification authority, or a blockchain-based distributed database.

5. The method according to any one of claims 1 to 3, wherein the storage terminal comprises a server of a certification authority; and
the root value of the Merkle tree constructed based on the plurality of pieces of identity information of the user is stored in a digital certificate of the user by the certification authority;
wherein the digital certificate comprises a content portion and a signature portion, the content portion comprises the root value of the Merkle tree constructed based on the plurality of pieces of identity information of the user, and the signature portion is an electronic signature of the content portion.

6. The method according to claim 5, wherein the content portion of the digital certificate further comprises the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user.

7. The method according to claim 5, wherein the storage terminal further comprises a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

8. The method according to claim 5, wherein the content portion of the digital certificate of the user further comprises a public key of the user.

9. The method according to claim 1, wherein the identity information of the user comprises one or more of a public key of the user, a name of the user, an address of the user, or an identification number of the user.

10. The method according to any one of claims 1 to 3, wherein the encoding comprises hash encoding.

11. An identify information verification method, comprising:
in response to identity information to be verified, obtaining, from a storage terminal, a Merkle proof of a leaf node corresponding to the identity information to be verified based on mapping relationships between the identity information to be verified and leaf nodes of a Merkle tree constructed based on a plurality of pieces of identity information of a user, and a root value of the Merkle tree constructed based on the plurality of pieces of identity information of the user, wherein leaf nodes of the Merkle tree are generated by encoding identity information of the user;
calculating a root value of a Merkle tree corresponding to the identity information to be verified based on the identity information to be verified and the Merkle proof; and
determining whether the root value of the Merkle tree corresponding to the identity information to be verified is the same as the root value of the Merkle tree constructed based on the plurality of pieces of identity information of the user.

12. The method according to claim 11, wherein the leaf nodes of the Merkle tree are encoded based on the identity information of the user and other data information; and
the method further comprises: obtaining mapping relationships between the other data information and the leaf nodes from the storage terminal; and
calculating a root value of a Merkle tree corresponding to the identity information to be verified based on the identity information to be verified and the Merkle proof comprises:
calculating the root value of the Merkle tree corresponding to the identity information to be verified based on the identity information to be verified, the other data information, and the Merkle proof

13. The method according to claim 12, wherein the other data information is a random number.

14. The method according to any one of claims 11 to 13, the storage terminal comprises one or more of a client device of a user, a server of a certification authority, or a blockchain-based distributed database.

15. The method according to any one of claims 11 to 13, the storage terminal comprises a server of a certification authority.
the root value of the Merkle tree constructed based on the plurality of pieces of identity information of the user is stored by the certification authority in a digital certificate of the user, wherein the digital certificate comprises a content portion and a signature portion, the content portion comprises the root value of the Merkle tree constructed based on the plurality of pieces of identity information of the user, and the signature portion is an electronic signature of the content portion; and
obtaining, from the storage terminal, the root value of the Merkle tree constructed based on the plurality of pieces of identity information of the user comprises:
obtaining a digital certificate of the user;
verifying the digital certificate by using a corresponding public key of a certification authority of the digital certificate; and
obtaining the root value of the Merkle tree constructed based on the plurality of pieces of identity information of the user after the verification is passed.

16. The method according to claim 15, wherein the content portion of the digital certificate further comprises the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user; and
obtaining, from the storage terminal, the Merkle proof of the leaf node corresponding to the identity information to be verified on the Merkle tree constructed based on the plurality of pieces of identity information of the user comprises:
obtaining a digital certificate of the user;
verifying the digital certificate by using a corresponding public key of a certification authority of the digital certificate; and
obtaining a mapping relationship between the identity information to be verified and the leaf node after the verification is passed, and obtaining, based on the mapping relationship between the identity information to be verified and the leaf node, the Merkle proof of the leaf node corresponding to the identity information to be verified on the Merkle tree constructed based on the plurality of pieces of identity information of the user.

17. The method according to claim 15, wherein the storage terminal further comprises a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

18. The method according to claim 15, wherein the content portion of the digital certificate of the user further comprises a public key of the user.

19. The method according to claim 11, wherein the identity information of the user comprises one or more of a public key of the user, a name of the user, an address of the user, or an identification number of the user.

20. The method according to any one of claims 11 to 13, wherein the encoding comprises hash encoding.

21. An identity information authentication device, comprising:
an acquisition unit, configured to obtain a plurality of pieces of identity information of a user;
a Merkle tree construction unit, configured to construct a Merkle tree based on the plurality of pieces of identity information of the user, wherein leaf nodes of the Merkle tree are generated by encoding identity information of the user; and
a transmitting unit, configured to transmit, to a storage terminal, mapping relationships between the plurality of pieces of identity information of the user and the leaf nodes, Merkle proofs of the leaf nodes corresponding to the plurality of pieces of identity information of the user on the Merkle tree constructed based on the plurality of pieces of identity information of the user, and a root value of the Merkle tree constructed based on the plurality of pieces of identity information of the user.

22. The device according to claim 21, wherein the leaf nodes of the Merkle tree are encoded based on the identity information of the user and other data information; and
the transmitting unit is further configured to transmit mapping relationships between the other data information and the leaf nodes to the storage terminal.

23. The device according to claim 22, wherein the other data information is a random number.

24. The device according to any one of claims 21 to 23, wherein the storage terminal comprises one or more of a client device of the user, a server of a certification authority or a blockchain-based distributed database.

25. The device according to any one of claims 21 to 23, wherein the storage terminal comprises a server of a certification authority; and
the root value of the Merkle tree constructed based on the plurality of pieces of identity information of the user is stored in a digital certificate of the user by the certification authority;
wherein the digital certificate comprises a content portion and a signature portion, the content portion comprises the root value of the Merkle tree constructed based on the plurality of pieces of identity information of the user, and the signature portion is an electronic signature of the content portion.

26. The device according to claim 25, wherein the content portion of the digital certificate further comprises the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user.

27. The device according to claim 25, wherein the storage terminal further a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

28. The device according to claim 25, wherein the content portion of the digital certificate of the user further comprises a public key of the user.

29. An identity information verification device, comprising:
an acquisition unit, configured to: in response to identity information to be verified, obtaining, from a storage terminal, a Merkle proof of a leaf node corresponding to the identity information to be verified based on mapping relationships between the identity information to be verified and leaf nodes of a Merkle tree constructed based on a plurality of pieces of identity information of a user, and a root value of the Merkle tree constructed based on the plurality of pieces of identity information of the user, wherein leaf nodes of the Merkle tree are generated by encoding identity information of the user;
a calculation unit, configured to calculate a root value of a Merkle tree corresponding to the identity information to be verified based on the identity information to be verified and the Merkle proof; and
a comparing unit, configured to determine whether the root value of the Merkle tree corresponding to the identity information to be verified is the same as the root value of the Merkle tree constructed based on the plurality of pieces of identity information of the user.

30. The device according to claim 29, wherein the leaf nodes of the Merkle tree are encoded based on the identity information of the user and other data information; and
the acquisition unit is further configured to obtain mapping relationships between the other data information and the leaf nodes from the storage terminal; and
the calculation unit is further configured to:
calculating the root value of the Merkle tree corresponding to the identity information to be verified based on the identity information to be verified, the other data information, and the Merkle proof.

31. The device according to claim 30, wherein the other data information is a random number.

32. The device according to any one of claims 29 to 31, wherein the storage terminal comprises one or more of a client device of the user, a server of a certification authority or a blockchain-based distributed database.

33. The device according to any one of claims 29 to 31, wherein the storage terminal comprises a server of a certification authority; and
the root value of the Merkle tree constructed based on the plurality of pieces of identity information of the user is stored by the certification authority in a digital certificate of the user, wherein the digital certificate comprises a content portion and a signature portion, the content portion comprises the root value of the Merkle tree constructed based on the plurality of pieces of identity information of the user, and the signature portion is an electronic signature of the content portion; and
the acquisition unit is further configured to:
obtain a digital certificate of the user;
verify the digital certificate by using a corresponding public key of a certification authority of the digital certificate; and
obtain the root value of the Merkle tree constructed based on the plurality of pieces of identity information of the user after the verification is passed.

34. The device according to claim 33, wherein the content portion of the digital certificate further comprises the mapping relationships between the plurality of pieces of identity information of the user and the leaf nodes, and Merkle proofs of the leaf nodes corresponding to the plurality of pieces of identity information of the user on the Merkle tree constructed based on the plurality of pieces of identity information of the user; and
the acquisition unit is further configured to:
obtain a digital certificate of the user;
verify the digital certificate by using a corresponding public key of a certification authority of the digital certificate; and
obtain a mapping relationship between the identity information to be verified and the leaf node after the verification is passed, and obtain, based on the mapping relationship between the identity information to be verified and the leaf node, the Merkle proof of the leaf node corresponding to the identity information to be verified on the Merkle tree constructed based on the plurality of pieces of identity information of the user.

35. The device according to claim 33, wherein the storage terminal further a client device of a user or a blockchain-based distributed database, and the mapping relationships between the plurality of pieces of identity information of the user and the Merkle proofs of the leaf nodes corresponding to the plurality of pieces of identity information of the user on the Merkle tree constructed based on the plurality of pieces of identity information of the user are stored in the client device of the user or the blockchain-based distributed database.

36. The device according to claim 33, wherein the content portion of the digital certificate of the user further comprises a public key of the user.

37. A computer device, comprising a storage device and a processor, wherein the storage device stores a computer program that can be run by a processor; and when the processor runs the computer program, the method according to any one of claims 1 to 10 is performed.

38. A computer device, comprising a storage device and a processor, wherein the storage device stores a computer program that can be run by a processor; and when the processor runs the computer program, the method according to any one of claims 11 to 20 is performed.

39. A computer-readable storage medium, wherein the medium stores computer programs, and when the computer programs are executed by a processor, the method according to any one of claims 1 to 10 is performed.

40. A computer-readable storage medium, wherein the medium stores computer programs, and when the computer programs are executed by a processor, the method according to any one of claims 11 to 20 is performed.
